# FASCICULE DE BREVET EUROPEEN

(11) **EP 0 305 285 B1**
(45) Date de publication et mention de la délivrance du brevet: **12.05.1993**
(21) Numéro de dépôt: 88402141.1
(22) Date de dépôt: 23.08.1988
(51) Int. Cl.: F42C 14/06, B64D 1/04

(54) **Dispositif d'armement avec sécurité pour une charge largable d'un porteur**
Armiergerät mit Sicherheitsvorrichtung für ein von einem Träger abgeworfenes Projektil
Arming device with safety for projectiles launched from a carrier

(30) Priorité: 28.08.1987 FR 8712036
(43) Date de publication de la demande: 01.03.1989
(73) Titulaire: THOMSON-BRANDT ARMEMENTS, 92516 Boulogne-Billancourt (FR)
(72) Inventeur: Boucard, Jean, F-75008 Paris (FR); Delaitre, André, F-75008 Paris (FR); Deliance, Jean, F-75008 Paris (FR); Winaver, André, F-75008 Paris (FR)
(74) Mandataire: Benoit, Monique

(56) Documents cités:
- EP-A- 0 124 884
- GB-A- 2 145 802
- US-A- 3 326 089
- US-A- 3 575 084

## Description

L'invention concerne le domaine des charges largables, par exemple à partir d'un aéronef auquel elles sont fixées, et en particulier leur dispositif de sécurité pour empêcher leur armement inopiné avant le largage de ces charges. L'invention permet également d'empêcher l'armement de ces charges après leur largage, si les charges doivent être larguées inertes.

La plupart des charges largables, tel que des bombes, sont équipées d'un certain nombre de système de commande, par exemple des fusées de mise à feu, qu'il est nécessaire de déclencher, à des moments déterminés, et en particulier, avec un certain retard pour des raisons essentiellement de sécurité lors du largage de la charge.

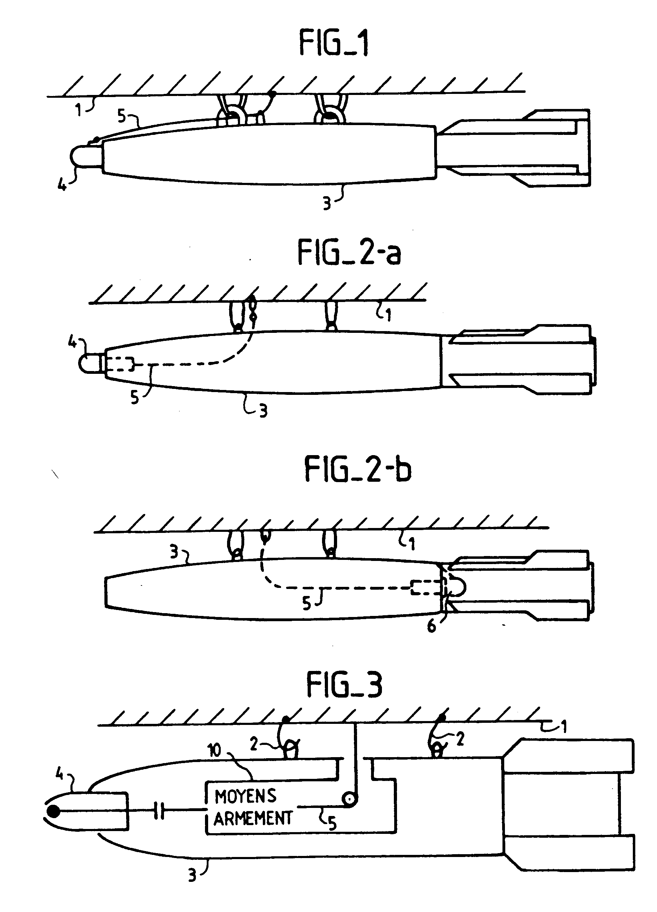

En référence à la figure 1, les fusées de mise à feu 4, constituant des moyens de déclenchement, lorsqu'elles sont placées à l'avant de la charge 3, c'est-à-dire en montage ogive, sont armées par l'extérieur de la charge, au moyen d'un câble 5, appelé souvent "sécurité largable", accrochées au porteur 1, c'est-à-dire en général à l'aéronef.

Le fait que ce câble de tirage, ou sécurité largable, passe à l'extérieur de la charge, a comme inconvénient, le fait que l'armement de la fusée peut avoir lieu de manière inopinée ou accidentelle. En effet, à la manipulation de la charge, pour le montage de différents éléments, ou pour son montage sur le porteur, le câble de tirage peut être actionné involontairement. La fusée est alors armée, et la charge est opérationnelle, son fonctionnement pouvant être provoqué à n'importe quel moment. Lorsqu'il s'agit d'une charge explosive, il est évident que ce genre d'événement ne doit pas avoir lieu ou ne puisse pas avoir lieu. De même, dans le cas d'une charge explosive aéroportée, un objet quelconque ou un volatile peut provoquer accidentellement le tirage des câbles, et donc l'armement de la fusée, et par la même de la charge, mettant en danger l'existence du véhicule porteur.

Il existe, à l'heure actuelle, des dispositifs permettant de réduire les risques d'armement accidentel :
La demande de brevet français FR-A-2 562 654, décrit un dispositif de sécurité pour empêcher l'armement d'une charge aéroportée avant le largage de celle-ci. Ce dispositif permet également le largage inerte, c'est-à-dire sans l'armement de la charge. Ce dispositif de sécurité est destiné à être associé à un mécanisme de largage, de manière à assurer un déclenchement effectif du système, uniquement lors du largage de l'engin équipé. Ce dispositif de sécurité comporte une pince traversée librement par un câble d'armement, lorsqu'elle est ouverte, et pincée sur le câble d'armement lorsqu'elle est fermée.

Par ailleurs, la demande de brevet européen EP-A-0 124 884 décrit, en référence à sa figure 1, une charge portable (1) comportant une fusée de mise à feu déclenchée au moyen d'un câble, accroché au porteur de la même façon que précédemment, mais passant, pour sa majeure partie, à l'intérieur de la charge, réduisant ainsi les risques d'armement accidentel. Lorsque le câble est tiré au moment du largage, il libère un percuteur qui vient activer la fusée de mise à feu.

Le but de l'invention est de créer un dispositif d'armement indépendant des dimensions de la charge à laquelle il est destiné et de conception telle qu'il puisse être fabriqué indépendamment de la charge, et monté sur celle-ci à n'importe quel moment, et en particulier au dernier moment.

La charge est du même type que celle décrite dans la demande de brevet EP-A-0 124 884, en ceci qu'elle comprend des moyens de déclenchement de mise à feu devant être armés par le largage, par l'intermédiaire d'un câble de tirage passant à l'intérieur de la charge.

Plus précisément, la présente invention concerne un dispositif d'armement avec sécurité dans une charge largable à partir d'un porteur en-dessous duquel elle est fixée, la charge comprenant des moyens de déclenchement de mise à feu devant être armés par le largage, par l'intermédiaire d'un câble de tirage passant à l'intérieur de la charge et lié, d'une part, au porteur, et d'autre part, à une première partie du dispositif d'armement, située à l'intérieur de la charge à proximité desdits moyens de déclenchement, et destinée à assurer l'armement desdits moyens de déclenchement par la poussée d'un élément d'une fusée, ledit dispositif d'armement étant caractérisé en ce que la première partie comporte des moyens mécaniques assurant une poussée sur une crémaillère d'armement constituant ledit élément, lorsque le câble est tiré, et un ressort fixé au câble de manière à être comprimé lors du largage de la charge, et à se détendre après une cassure du câble pour permettre le rembobinage du câble à l'intérieur de la charge, et en ce qu'il comporte une deuxième partie reliée à la première partie par le câble de tirage, disposant d'un palpeur sortant de la charge par l'action du câble et bloquant ledit câble lorsque le palpeur vient en butée contre le porteur, empêchant ainsi l'armement inopiné avant largage.

L'invention et ses caractéristiques seront mieux comprises à la lecture de la description qui suit, et qui est illustrée par les figures suivantes représentant :
- Figures 1, et 2b une charge largable aéroportée et équipée d'un dispositif d'armement selon l'art antérieur ;
- Figure 2a, une charge largable aéroportée selon une variante possible de l'art antérieur ;
- Figure 3, un schéma du principe de fonctionnement du dispositif selon l'invention ;
- Figures 4a et 4b, une réalisation possible du dispositif selon l'invention, installé dans une charge largable ;
- Figures 5a et 5b, une variante de réalisation possible de la partie 10B du dispositif selon l'invention.

La référence aux figures 2a et 2b, représentant respectivement une charge 3 en montage ogive, c'est-à-dire avec des moyens de mise à feu tels qu'une fusée 4, placée à l'avant de la charge et, une charge 3 avec un montage culot, c'est-à-dire avec une fusée de mise à feu 6 placée à l'arrière de la charge. On voit que dans ces deux cas, un fil de tirage 5 est fixé, d'une part au porteur 1 et d'autre part à la fusée 4, c'est-à-dire aux moyens de déclenchement. Ce câble de tirage 5 pénètre aussitôt et au plus près à l'intérieur de la charge 3 pour atteindre la fusée 4 par un parcours entièrement intérieur à la charge.

En référence à la figure 3 et selon l'invention, on intercale un dispositif d'armement 10 placé à l'intérieur de la charge 3, et sur lequel agit le câble de tirage 5. Lors du largage de la charge, le câble de tirage 5 fixé au support 1, agit sur ce dispositif d'armement qui arme mécaniquement les moyens de déclenchement 4, et plus précisément la fusée de mise à feu. Ce dispositif d'armement constitue également un dispositif de sécurité empêchant tout armement malencontreux et involontaire de la fusée de mise à feu 4.

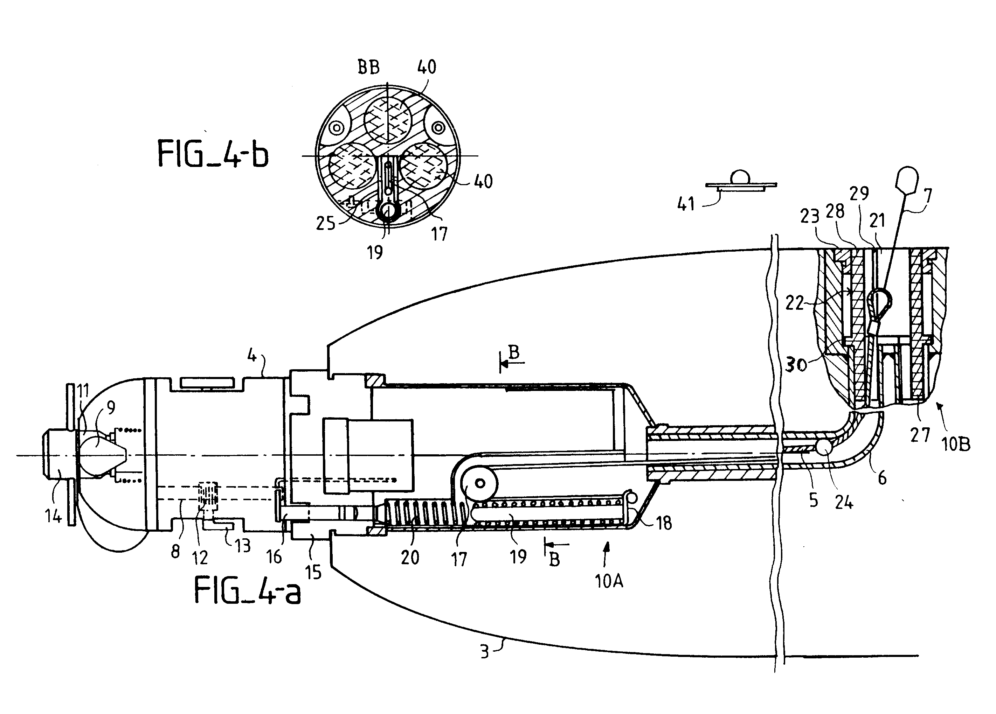

La figure 4a est une vue en coupe partielle de la charge selon l'invention. On y retrouve les principaux éléments représentés sur les autres figures, sauf le support et les moyens d'accrochage de la charge à celui-ci. Ces éléments sont, la charge elle-même 3, les moyens de déclenchement 4, qui sont ici une fusée de mise à feu vissée à l'avant de la charge, le câble de tirage 5 et le dispositif d'armement 10 placé au centre de la charge et en contact avec la fusée de mise à feu 4. Dans cette réalisation, le dispositif d'armement se divise en deux parties. Une première partie 10a placée en contact mécanique avec la fusée de mise à feu 4, et centrée comme celle-ci sur l'axe longitudinal de la charge. La deuxième partie du dispositif d'armement est repérée 10b est placée à l'endroit où le câble de tirage 5 sort de la charge, c'est-à-dire à la surface de celle-ci en regard de la partie inférieure du porteur. Le logement dans lequel se trouve la première partie 10a de ce dispositif d'armement, existe déjà sur la plupart des charges explosives existantes. Ces deux parties sont reliées par un conduit 6 contenant le câble de tirage 5. Ce dernier est ici représenté avec un fil prolongateur 7 qui est lui-même accroché au support. Ce prolongateur est choisi de telle manière qu'il casse sous une tension mécanique déterminée.

La première partie du dispositif d'armement 10a a pour première fonction de pousser une crémaillère d'armement 8 de la fusée 4, et pour deuxième fonction de rembobiner le câble de tirage 5, une fois que l'armement a été effectué. La deuxième partie 10b du dispositif d'armement a pour fonction d'empêcher l'armement inopiné de la fusée, c'est-à-dire, le tirage inopiné du câble 5 ou du prolongateur 7 avant le largage de la charge.

La fusée de mise à feu 4 représentée sur cette figure 4a, possède comme pièce principale un palpeur 9 qui peut être translaté grâce à la crémaillère d'armement 8 de manière à sortir à l'extrémité avant de la fusée de mise à feu. Un capuchon de sécurité 14 est fixé au préalable sur le trou 11 par lequel le palpeur 9 sort de la fusée. La crémaillère d'armement 8 est accessible par la face arrière de la fusée de mise à feu.

On peut remarquer, sur cette figure, une roue dentée 12, s'engrenant dans la crémaillère d'armement 8, et dont l'axe sort à l'extérieur de la fusée et autour duquel peut pivoter un levier 13. C'est ce dernier qui est utilisé dans les dispositifs selon l'art antérieur, pour l'armement. En effet c'est après lui qu'est attaché le câble de tirage.

La première partie du dispositif d'armement est constitué d'un carter 15 à l'intérieur duquel peut coulisser une tige d'armement 16, qui pousse, la crémaillère d'armement 8. A l'extrémité arrière de ce carter 15 est fixé le conduit 6 dans lequel est placé le câble de tirage 5, lequel débouche à l'intérieur dudit carter pour venir passer à l'intérieur de la gorge d'une poulie 17 de manière à être envoyé dans la direction opposée jusqu'à l'arrière du carter. Là, le câble de tirage 5 est fixé à une rondelle 18 pour pousser un doigt d'armement 19 contre la tige d'armement 16. La fonction de rembobinage est assurée, par le fait que le doigt d'armement 19 est placé à l'intérieur d'un ressort 20. Ce dernier et le doigt d'armement sont placés tangentiellement aux deux brins du câble de tirage pour assurer le fonctionnement suivant.

Lorsque le câble de tirage 5, est tiré par rapport à la charge, son extrémité fixée à la bague 18 comprime le ressort 20 et fait translater le doigt d'armement 19 en direction de la tige d'armement 16, jusqu'à ce qu'il la pousse de quelques centimètres, de façon à armer la fusée.

Dans le processus de fonctionnement général du système, le câble de tirage 5 ou son prolongateur 7 est cassé à un moment du largage, ce qui provoque la détente du ressort 20, reprenant sa position initiale, et rembobinant ainsi le câble 5, de manière à ce qu'il ne traîne pas en dehors de la charge largable.

La deuxième partie 10b du dispositif d'armement peut être réalisée de la manière suivante. Dans l'orifice 21 pratiqué à la surface de la charge, et par lequel sort le câble de tirage ou son prolongateur 7, est placé un manchon palpeur 22 qui peut coulisser et ainsi sortir de manière à être en saillie de la charge. Une butée 23 est prévue pour limiter de déplacement. Une bille d'armement 24 est fixée après le câble de tirage 5 dans le conduit 6 faisant, pour obtenir une sortie perpendiculaire à l'axe de la charge, un coude en direction du manchon 22. La bille d'armement 24 est placée près de ce manchon. La charge est positionnée sous son porteur de manière à ce que, le manchon palpeur 22 puisse rencontrer, lorsqu'il sort de la charge, un obstacle fixe de ce porteur.

Cette deuxième partie 10b du dispositif d'armement, fonctionne de la manière suivante. Lorsque le câble de tirage, retenu par le porteur, se déplace à l'intérieur du conduit 6, la bille d'armement 24 arrive en contact avec l'extrémité intérieure 27 du manchon palpeur. Le déplacement du câble se continuant, le manchon palpeur sort de la charge jusqu'à ce qu'il rencontre par son extrémité extérieure 28 une partie fixe du porteur, quand le tirage du câble lieu lorsque la charge étant encore accrochée au porteur. On voit dans ce cas, que le tirage du câble 5 est limité par ce manchon palpeur arrivant en butée contre le porteur. La position de la bille d'armement 24 par rapport au manchon palpeur 22 et la distance de translation du palpeur par rapport au porteur, est calculée de manière à ce que l'armement ne puisse pas avoir lieu dans ce cas là, c'est-à-dire que la tige d'armement 16 n'est pas actionnée par le doigt d'armement 19 lorsque le manchon palpeur arrive en butée contre le porteur.

L'armement de la fusée avant le largage n'est donc pas possible. On voit également que, si le porteur est écarté de ce manchon palpeur, ce qui est le cas lors du largage de la bombe, le manchon peut continuer sa translation jusqu'à ce que la tige d'armement pousse complètement la crémaillère d'armement 8. Le manchon palpeur est placé à l'intérieur de la butée 23, et possède un épaulement 30 disposé à l'intérieur de la charge par rapport à cette butée 23. La distance séparant cet épaulement de la butée est supérieure à la distance séparant l'extrémité extérieure 28 du manchon palpeur et le porteur. Cette distance correspond à la distance nécessaire de translation du doigt d'armement 19, pour que l'armement de la fusée de mise à feu 4 ait lieu. De cette manière, lorsque l'épaulement 30 du manchon palpeur 22 arrive contre la butée 23, le câble de tirage 5 restant fixé, par l'intermédiaire de son prolongateur 7 au porteur, la charge étant en chute libre, le prolongateur 7 casse, sa résistance à la tension étant insuffisante pour résister chute de la charge. A partir de ce moment, a lieu le rembobinage du câble de tirage tel qu'il a été décrit précédemment.

La figure 4b représente, sous la forme d'une coupe transversale de la charge, l'agencement du dispositif d'armement 10 selon l'invention. On y retrouve le doigt d'armement 19 entouré du ressort qui est placé à la périphérie du dispositif d'armement, et la poulie 17, qui est placée plus à l'intérieur du dispositif d'armement. Le reste du volume de ce dernier est occupé par des pains d'explosif 40 qui servent de relais entre les moyens de mise à feu et la charge proprement dite. Ils seront initiés au moment du déclenchement provoqué par la fusée de mise à feu.

Dans la réalisation qui est décrite, le montage du manchon palpeur 22 se fait après le montage du câble de tirage 5, en tirant sur ce dernier, pour le faire passer par une fente 29 pratiquée dans le manchon 28.

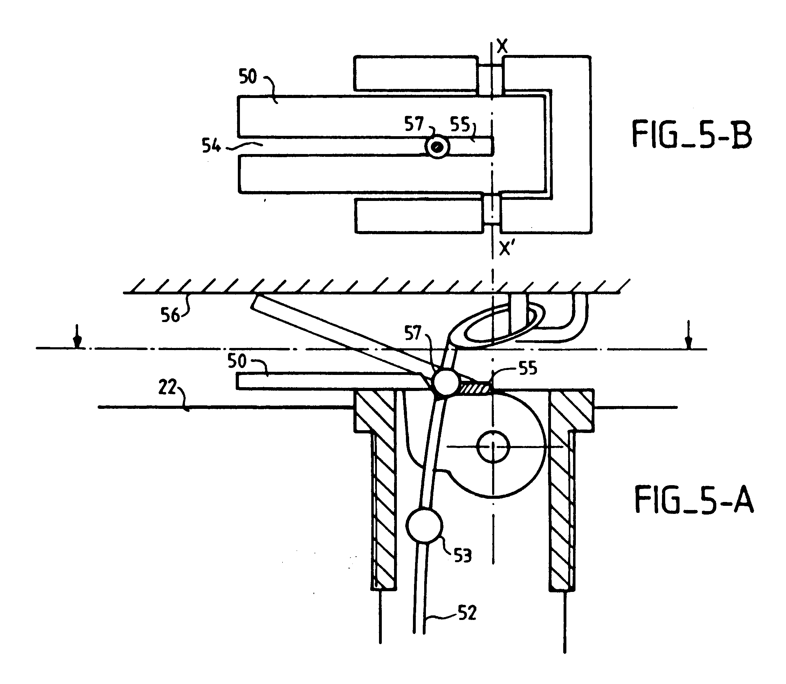

En référence aux figures 5a et 5b, la partie 10B de la figure 4a du dispositif peut être réalisée différemment. Le manchon palpeur est remplacé pour sa fonction de palpage par un levier palpeur 50, pivotant autour d'un axe XX' parallèle à la direction du câble 52. Une bille d'armement 53 est toujours utilisée pour bouger un organe mobile ; dans ce cas, il s'agit du levier palpeur 50. En effet, le câble 52 portant cette bille d'armement passe dans une fente 54 du levier, moins large que

## Revendications

1. Dispositif d'armement avec sécurité dans une charge largable à partir d'un porteur (1) en-dessous duquel elle est fixée, la charge comprenant des moyens de déclenchement de mise à feu (4) devant être armés par le largage, par l'intermédiaire d'un câble de tirage (5) passant à l'intérieur de la charge et lié, d'une part, au porteur (1), et d'autre part, à une première partie (10A) du dispositif d'armement (10), située à l'intérieur de la charge à proximité desdits moyens de déclenchement, et destinée à assurer l'armement desdits moyens de déclenchement (4) par l'intermédiaire d'un élément d'une fusée, ledit dispositif d'armement (10) étant caractérisé en ce que la première partie (10A) comporte des moyens mécaniques (16, 18, 19) assurant une poussée sur une crémaillère d'armement (8) constituant ledit élément, lorsque le câble est tiré, et un ressort (20) fixé au câble (5) de manière à être comprimé lors du largage de la charge, et à se détendre après une cassure du câble pour permettre le rembobinage du câble à l'intérieur de la charge, et en ce qu'il comporte une deuxième partie (10B) reliée à la première partie par le câble de tirage, disposant d'un palpeur (22 ; 50) sortant de la charge par l'action du câble et bloquant ledit câble lorsque le palpeur vient en butée contre le porteur, empêchant ainsi l'armement inopiné avant largage.

2. Dispositif d'armement avec sécurité selon la revendication 1, caractérisé en ce que les moyens mécaniques sont constitués d'une rondelle (18) à laquelle est fixé le câble (5) afin de pousser, lorsque le câble est tiré, un doigt d'armement (19) contre une tige d'armement (16), laquelle tige effectue la poussée sur ladite crémaillère d'armement (8) des moyens de déclenchement (4).

3. Dispositif d'armement selon la revendication 1 ou 2, pour une charge largable dont les moyens de déclenchement de mise à feu (4) sont sur l'axe longitudinal de la charge, le dispositif d'armement étant caractérisé en ce que la première partie (10A) du dispositif d'armement (10) se situe sur l'axe longitudinal de la charge, en contact avec lesdits moyens de déclenchement de mise à feu.

4. Dispositif d'armement selon l'une quelconque des revendications précédentes, caractérisé en ce que le palpeur est un manchon palpeur (22) entourent le câble de tirage (5) à l'endroit où celui-ci sort de la charge, et en ce que la deuxième partie (10B) du dispositif d'armement (10) comprend une bille d'armement (24) fixée sur le câble de tirage (5), à une courte distance du manchon palpeur, le câble de tirage faisant entre les deux un coude, de manière à ce que, lors du tirage du câble de tirage, la bille d'armement entraîne le manchon palpeur vers l'extérieur de la charge.

5. Dispositif d'armement selon la revendication 4, caractérisé en ce que ledit manchon palpeur (22) possède un épaulement (24), qui, lors du tirage du câble de tirage (5), vient en butée contre une butée (23) fixée sur la charge (3), de manière à provoquer la rupture d'un prolongateur (7) du câble de tirage fixé au porteur (1) lors du largage de la charge.

6. Dispositif d'armement selon l'une quelconque des revendications 3 à 5, caractérisé en ce qu'il est monté sur une charge comprenant plusieurs moyens de déclenchement devant déclencher à des moments différents des dispositifs différents, et en ce que le dispositif d'armement comporte plusieurs premières parties (10A) et une seule deuxième partie (10B) commune, tous les câbles de tirage (5) passant à l'intérieur d'un seul palpeur (22).

7. Dispositif selon l'une quelconque des revendications 1 à 3, caractérisé en ce que le palpeur est un levier palpeur (50) pivotant autour d'un axe (X, X') perpendiculaire au câble (52), le levier possédant une fente (54) dans laquelle passe une bille d'armement (53) fixée sur le câble (52) à une courte distance du levier palpeur (50), la fente (54) étant moins large que la bille d'armement (53) pour que, lors du tirage du câble, la bille d'armement (53) entraîne le levier palpeur (50) en rotation.

8. Dispositif selon la revendication 7, caractérisé en ce qu'il comprend une bille de positionnement (57) fixée sur le câble (52) au dessus de la fente (54) pour positionner et ramener le câble à l'intérieur de la charge.

9. Dispositif d'armement selon l'une quelconque des revendications précédentes caractérisé en ce que les moyens de déclenchement (4) de la charge sur laquelle il est monté déclenchent une charge explosive militaire aéroportée, le porteur (1) étant un aéronef.

10. Dispositif d'armement selon la revendication 1, caractérisé en ce qu'il est implanté à l'intérieur d'une rainure radiale (25) placée sur l'axe longitudinal de la charge et dans un plan perpendiculaire.

## Claims

1. Safety arming device in a load which can be released from a carrier (1) below which it is fixed, the load comprising means for triggering firing (4) which have to be armed by the releasing, by means of a draw cable (5) passing inside the load and linked, on the one hand, to the carrier (1), and, on the other hand, to a first part (10A) of the arming device (10), situated inside the load in proximity to the said triggering means, and intended to carry out arming of said triggering means (4) by means of an element of a fuse, said arming device (10) being characterised in that the first part (10A) comprises mechanical means (16, 18, 19) producing a thrust on an arming rack (8) constituting said element, when the cable is pulled, and a spring (20) fixed to the cable (5) in such a way as to be compressed during releasing of the load, and to extend after the cable is broken in order to allow rewinding of the cable inside the load, and in that it comprises a second part (10B) linked to the first part by the draw cable, having a feeler (22; 50) coming out of the load by the action of the cable and locking said cable when the feeler abuts against the carrier, thus preventing unintentional arming before releasing.

2. Safety arming device according to Claim 1, characterised in that the mechanical means consist of a washer (18) to which the cable (5) is fixed so as to push, when the cable is pulled, an arming finger (19) against an arming stem (16), which stem exerts the thrust on said arming rack (8) of the triggering means (4).

3. Arming device according to Claim 1 or 2, for a releaseable load in which the means for triggering firing (4) are on the longitudinal axis of the load, the arming device being characterised in that the first part (10A) of the arming device (10) is situated on the longitudinal axis of the load, in contact with said means for triggering firing.

4. Arming device according to any one of the preceding claims, characterised in that the feeler is a feeler sleeve (22) surrounding the draw cable (5) at the site where the latter comes out of the load, and in that the second part (10B) of the arming device (10) comprises an arming ball (24) fixed on the draw cable (5), at a short distance from the feeler sleeve, the draw cable forming a bend between the two, in such a way that, when the draw cable is pulled, the arming ball drives the feeler sleeve outwards from the load.

5. Arming device according to Claim 4, characterised in that said feeler sleeve (22) has a shoulder (30), which, when the draw cable (5) is pulled, abuts against a stop (23) fixed onto the load (3), in such a way as to cause the breaking of an extender (7) of the draw cable fixed to the carrier (1) when the charge is released.

6. Arming device according to any one of Claims 3 to 5, characterised in that it is mounted on a load comprising several triggering means which have to be triggered at different moments for the different devices, and in that the arming device comprises several first parts (10A) and a single, common second part (10B), all the draw cables (5) passing inside a single feeler (22).

7. Device according to any one of Claims 1 to 3, characterised in that the feeler is a feeler lever (50) pivoting around an axis (X, X') perpendicular to the cable (52), the lever having a slot (54) into which passes an arming ball (53) which is fixed on the cable (52) at a short distance from the feeler lever (50), the slot (54) being narrower than the arming ball (53) so that, when the cable is pulled, the arming ball (53) drives the feeler lever (50) in rotation.

8. Device according to Claim 7, characterised in that it comprises a positioning ball (57) fixed on the cable (52) above the slot (54) in order to position the cable and bring it back inside the load.

9. Arming device according to any one of the preceding claims, characterised in that the triggering means (4) of the load on which it is mounted trigger an airborne military explosive load, the carrier (1) being an aircraft.

10. Arming device according to Claim 1, characterised in that it is installed inside a radial groove (25) placed on the longitudinal axis of the load and in a perpendicular plane.

## Patentansprüche

1. Sichere Entsicherungsvorrichtung in einer von einem Träger (1) abwerfbaren Last, die unter dem Träger befestigt ist und Zündmittel (4) aufweist, die beim Abwurf über ein Zugseil (5) entsichert werden sollen, das innerhalb der Last verläuft und mit einem Ende am Träger (1) und mit dem anderen Ende an einem ersten Teil (10A) der Entsicherungsvorrichtung (10) befestigt ist, welche sich innerhalb der Last in der Nähe der Zündmittel befindet und dazu bestimmt ist, die Entsicherung der Zündmittel (4) über ein Zündelement zu bewirken, dadurch gekennzeichnet, daß der erste Teil (10A) der Entsicherungsvorrichtung (10) mechanische Mittel (16, 18, 19), die eine das Zündelement bildende Entsicherungszahnstange (8) verschieben, wenn an dem Seil gezogen wird, und eine am Seil (5) so befestigte Feder (20) aufweist, daß sie beim Abwurf der Last komprimiert wird und sich nach dem Reißen des Seils entspannt, um das Seil ins Innere der Last hineinzuziehen, und daß die Vorrichtung einen zweiten Teil (10B) enthält, der mit dem ersten Teil über das Zugseil verbunden ist und einen Fühler (22; 50) aufweist, der unter der Wirkung des Seils aus der Last hervortritt und das Seil blockiert, wenn der Fühler am Träger in Anschlag gelangt, wodurch eine ungewollte Entsicherung vor dem Abwurf verhindert wird.

2. Sichere Entsicherungsvorrichtung nach Anspruch 1, dadurch gekennzeichnet, daß die mechanischen Mittel aus einer Scheibe (18) bestehen, an der das Seil (5) befestigt ist, um bei gespanntem Seil einen Entsicherungsfinger (19) gegen eine Entsicherungsstange (16) zu drücken, wobei diese Stange auf die Entsicherungszahnstange (8) der Zündmittel (4) drückt.

3. Entsicherungsvorrichtung nach Anspruch 1 oder 2 für eine abwerfbare Last, deren Zündmittel (4) sich in der Längsachse der Last befinden, dadurch gekennzeichnet, daß der erste Teil (10A) der Entsicherungsvorrichtung (10) sich in der Längsachse der Last in Kontakt mit den Zündmitteln befindet.

4. Entsicherungsvorrichtung nach einem beliebigen der vorhergehenden Ansprüche, dadurch gekennzeichnet, daß der Fühler eine Tasthülse (22) ist, die das Zugseil (5) an der Stelle umgibt, an der es aus der Last hervortritt, und daß der zweite Teil (10B) der Entsicherungsvorrichtung (10) eine Entsicherungskugel (24) enthält, die auf dem Zugseil (5) in geringem Abstand von der Tasthülse befestigt ist, wobei das Seil zwischen diesen beiden umgelenkt wird, so daß die Entsicherungskugel die Tasthülse aus der Last hinausschiebt, wenn am Zugseil gezogen wird.

5. Entsicherungsvorrichtung nach Anspruch 4, dadurch gekennzeichnet, daß die Tasthülse (22) eine Schulter (24) besitzt, die beim Ziehen am Zugseil (5) gegen einen an der Last (3) befestigten Anschlag (23) zur Anlage kommt, so daß ein am Träger (1) befestigtes Verlängerungsteil (7) des Zugseils beim Abwurf der Last reißt.

6. Entsicherungsvorrichtung nach einem beliebigen der Ansprüche 3 bis 5, dadurch gekennzeichnet, daß sie an einer Last befestigt ist, die mehrere Zündmittel enthält, die zu unterschiedlichen Zeitpunkten unterschiedliche Vorrichtungen auslösen sollen, und daß die Entsicherungsvorrichtung mehrere erste Teile (10A) und einen gemeinsamen zweiten Teil (10B) enthält, wobei alle Zugseile (5) in einem gemeinsamen Fühler (22) verlaufen.

7. Vorrichtung nach einem beliebigen der Ansprüche 1 bis 3, dadurch gekennzeichnet, daß der Fühler ein Tasthebel (50) ist, der um eine Achse (X, X') senkrecht zum Seil (52) schwenkbar ist und einen Schlitz (54) aufweist, durch den eine am Seil (52) in geringem Abstand von dem Tasthebel (50) befestigte Entsicherungskugel (53) verläuft, wobei der Schlitz (54) weniger weit als die Entsicherungskugel (53) dick ist, so daß die Entsicherungskugel (53) beim Ziehen am Seil den Tasthebel (50) in Drehung versetzt.

8. Vorrichtung nach Anspruch 7, dadurch gekennzeichnet, daß eine Positionierkugel (57) vorgesehen ist, die am Seil (52) oberhalb des Schlitzes (54) befestigt ist, um das Seil zu positionieren und in die Last zurückzuziehen.

9. Entsicherungsvorrichtung nach einem beliebigen der vorhergehenden Ansprüche, dadurch gekennzeichnet, daß die Zündmittel (4) für die Last, an der die Vorrichtung montiert ist, eine militärische Explosivlast zünden, wobei der Träger (1) ein Flugzeug ist.

10. Entsicherungsvorrichtung nach Anspruch 1, dadurch gekennzeichnet, daß sie in einer radialen Rinne (25) liegt, die sich in der Längsachse der Last und in einer senkrechten Ebene erstreckt.
